# EUROPÄISCHE PATENTSCHRIFT

(11) **EP 1 508 719 B1**
(45) Veröffentlichungstag und Bekanntmachung des Hinweises auf die Patenterteilung: **19.10.2011**
(21) Anmeldenummer: 04019370.8
(22) Anmeldetag: 16.08.2004
(51) Int. Cl.: F16D 69/02, C04B 35/80, C04B 35/573

(54) **Reibpaarung für Kupplungssysteme**
Friction pairing for a clutch system
Accouplement de frottement pour système d'embrayage

(30) Priorität: 20.08.2003 DE 10338201
(43) Veröffentlichungstag der Anmeldung: 23.02.2005
(73) Patentinhaber: AUDI AG, 85045 Ingolstadt (DE)
(72) Erfinder: Kienzle, Andreas, Dr., 86753 Möttingen (DE); Krupka, Mario, 86477 Adelsried (DE); Cabello, Gustavo, 86152 Augsburg (DE); Winkelmann, Peter, 86672 Thierhaupten (DE); Müller, Joachim, 86609 Donauwörth (DE)
(74) Vertreter: Deckers, Hellmuth Alexander

(56) Entgegenhaltungen:
- EP-A- 0 887 572
- EP-A- 0 987 464
- EP-A- 1 079 137
- EP-A- 1 273 818
- EP-A- 1 319 640
- EP-A- 1 323 944
- DE-C1- 19 711 829

## Beschreibung

Die Erfindung betrifft Kupplungssysteme mit einer Reibpaarung.

Kupplungssysteme werden in Kraftfahrzeugen zur Trennung von Motor und Getriebe eingesetzt. In modernen Fahrzeugen werden fast ausschließlich Reibungskupplungen oder hydrodynamische Kupplungen verwendet. Bei der gebräuchlichen Reibungskupplung wird die kraftschlüssige Verbindung zwischen Motorwelle und Getriebeeingangswelle durch eine oder mehrere aufeinandergepreßte Scheiben hergestellt, wobei mindestens eine mit der Getriebeeingangswelle verbundene Kupplungsscheibe, die beiderseits Beläge trägt, zwischen der Schwungscheibe des Motors und einer Kupplungsdruckplatte angeordnet ist. Beim Treten des Kupplungspedals wird die Druckplatte entgegen der Federkraft der Tellerfeder von der Kupplungsscheibe weggedrückt, wodurch die Kupplungsscheibe freikommt. Die Verbindung zwischen Motor und Getriebe ist dadurch unterbrochen.

Die übertragbaren Drehmomente hängen bei vorgegebener Haftreibung von der Fläche und vom Durchmesser der Kupplungsscheibe sowie von der Federkraft der Tellerfeder ab. Für große Drehmomente werden daher Kupplungssysteme mit größerer Reibfläche oder auch Mehrscheibenkupplungen eingesetzt. Die Kupplungsscheibe unterliegt vor allem beim Anfahren einer Abnutzung durch Schleifen und erwärmt sich durch den Reibungsvorgang. Durch diese Erwärmung kann sich die Haftreibung und damit das übertragbare Drehmoment vermindern. Lokale Erwärmung führt auch zu ungleichmäßiger Flächenpressung und damit zu Rupfen.

Gegenüber diesem Stand der Technik besteht die Aufgabe, Kupplungssysteme bereitzustellen, die möglichst geringe Abhängigkeit der Haftreibung von der Betriebstemperatur zeigen, und deren Haftreibung auch unabhängig vom Verdrehwinkel ist.

Reibpaarungen mit keramischen Werkstoffen, insbesondere faserverstärkten keramischen Werkstoffen sind bekannt. In der Anwendung als Bremsscheiben und Bremsbeläge ist eine hohe Wärmebeständigkeit, eine hohe Energieaufnahme und ein vom Belastungszustand möglichst wenig abhängender Reibbeiwert für die Gleitreibung gefordert. Für Kupplungssysteme werden hohe Haftreibung und hohe Torsionssteifigkeit sowie ein vom Verdrehwinkel unanhängiger Kraftschluß durch Haftreibung gewünscht.

Bei dem sogenannten Schlupf der Kupplung erfolgt die Kraftübertragung durch Gleitreibung zwischen den Flächen der Reibpaarung. Beim Übergang vom Schlupf zum Kraftschluß ist ein möglichst wenig abrupter Übergang erwünscht, der sowohl zum Komfort der Kupplung beiträgt als auch die plötzliche Torsionsbelastung der Getriebewelle vermindert. Bei den bisher verwendeten Materialien war auch eine Betriebsweise im Dauerschlupf nicht möglich, da durch die starke Erwärmung bei den herkömmlichen Materialien zum einen der Reibwert der Reibpaarung verändert wurde (diese Schwankungen im Reibwert der Reibpaarung führen zu dem bekannten "Rupfen") und andererseits an die Wärmebeständigkeit der umgebenden Aggregate zu hohe Anforderungen gestellt wurden.

Es besteht daher die Aufgabe, Kupplungssysteme mit einer Reibpaarung bereitzustellen, die ermöglicht, eine Kupplung im Dauerschlupf zu betreiben und die einen möglichst ruckfreien Übergang von Gleit- zu Haftreibung ermöglicht.

Die Aufgabe wird gelöst durch Kupplungssysteme mit einer Reibpaarung aus zwei Materialien, in der eines der Materialien ein faserverstärkter keramischer oder metallischer Werkstoff **A** ist, der Verstärkungsfasern aus Kohlenstoff oder keramischen Fasern oder Whiskern enthält. Das mit dem Material **A** in der Reibpaarung zusammenwirkende Material **B** ist ein keramischer Werkstoff **B11**, dessen Matrix einen Massenanteil von mindestens 40 % Siliciumcarbid aufweist. Diese Werkstoffe **B11** können gegebenenfalls durch Infiltration mit Metallschmelzen zu Werkstoffen **B11'** modifiziert werden. Es ist erfindungsgemäß auch möglich, faserverstärkte oder mit Metallwhiskern verstärkte Materialien **B** einzusetzen, wobei bevorzugt mit Kurzfasern aus Kohlenstoff, Fasern aus carbidischen Materialien wie Siliciumcarbid und Borcarbid, Fasern aus oxidischen oder nitridischen keramischen Materialien wie Aluminiumoxid und Siliciumnitrid, amorphen Fasern wie Silicium-Bor-Carbid-Nitrid, und Whiskern aus hochschmelzenden Metallen wie Molybdän, Wolfram, Tantal, Osmium oder Hafnium oder keramischen Stoffen verstärkte Materialien **B** gewählt werden.

Die Fasern aus Kohlenstoff können Langfasern (mit einer gewichtsmittleren Faserlänge von mindestens 50 mm) oder Kurzfasern mit einer gewichtsmittleren Faserlänge von 0,1 mm bis 30 mm, bevorzugt 0,1 mm bis 15 mm und insbesondere 0,2 mm bis 5 mm. Ihr Durchmesser beträgt 4 µm bis 12 µm, bevorzugt 5 µm bis 10 µm, und insbesondere 6 µm bis 8 µm. Die bevorzugten Abmessungen der Fasern aus keramischen Materialien entsprechen denen der genannten Kohlenstoff-Kurzfasern. Die Abmessungen der eingesetzten Whisker entsprechen den üblichen.

Als Werkstoff **B11** werden oxidische Keramiken wie Aluminiumoxid, Aluminiumtitanat, Magnesiumoxid, Yttriumoxid, Hafniumoxid und Zirkonoxid sowie deren Mischungen, nitridische Keramiken wie Bornitrid, Aluminiumnitrid, Siliciumnitrid, Titannitrid und Zirkonnitrid sowie deren Mischungen, carbidische Keramiken wie Siliciumcarbid sowie die Carbide von Bor, Titan, Zirkon, Hafnium, Tantal und Wolfram und deren Mischungen eingesetzt, die mindestens einen Massenanteil von 40 % an Siliciumcarbid sowie elementares Silicium enthalten.

Als Werkstoff **B11'** sind die oben genannten geeignet, wobei ein poröser Werkstoff entsprechend **B11** durch Infiltration mit der Schmelze eines Metalls wie Kupfer, Eisen oder Titan oder von Mischungen der genannten Stoffe behandelt wird, wodurch die Schmelze in die Poren des Werkstoffs eindringt und diese füllt.

Die Beläge aus faserverstärkten keramischen Werkstoffen werden bevorzugt auf einem Träger aus Metall oder faserverstärkter Keramik befestigt. Dabei kann die Befestigung durch Kleben, Schrauben, Nieten oder durch andere geeignete Verbindungstechniken erfolgen.

Besonders bevorzugt enthält die Matrix der faserverstärkten keramischen Werkstoffe **B11** 60 % bis 90 % an Siliciumcarbid, 0 % bis 30 % an elementarem Silicium und 0 % bis 10 % an elementarem Kohlenstoff. Der Massenanteil der Kohlenstoff-Kurzfasern in dem keramischen Werkstoff beträgt bevorzugt 20 % bis 60 %, besonders bevorzugt 25 % bis 50 %, und insbesondere 30 % bis 35 %.

Die gewichtsmittlere Länge der Kurzfasern aus Kohlenstoff ist bevorzugt 0,001 mm bis 30 mm, besonders bevorzugt 0,1 mm bis 15 mm und insbesondere 0,2 mm bis 5 mm. Ihr Durchmesser beträgt 4 µm bis 12 µm, bevorzugt 5 µm bis 10 µm, und insbesondere 6 µm bis 8 µm.

Die Beläge aus dem faserverstärkten keramischen Werkstoff sind bevorzugt 2 mm bis 6 mm dick und haben die Form von abgerundeten Rechtecken, abgerundeten Trapezen oder Kreisringsegmenten, wobei die Erstreckung in Richtung des Kupplungsscheibenradius bevorzugt 10 mm bis 30 mm und die in Umfangsrichtung bevorzugt 10 mm bis 90 mm beträgt. Es ist bevorzugt, mindestens 2, bevorzugt mindestens 3 und besonders bevorzugt mindestens 4 dieser Beläge symmetrisch über den Umfang der Kupplungsscheibe anzuordnen.

Die Werkstoffe für die Beläge lassen sich herstellen durch ein mehrstufiges Verfahren, das die genannten Schritte umfaßt:
- im ersten Schritt werden Kohlenstoff-Kurzfasern mit carbonisierbaren durch Erwärmen erweichenden Stoffen (nachfolgend als "Binder" bezeichnet) vermischt, diese Mischungen werden
- im zweiten Schritt unter Anwendung von Druck und Temperatur zu Körpern verpreßt, die in ihren Abmessungen den gewünschten Belägen entsprechen,
- die Preßkörper werden im dritten Schritt durch Erwärmen unter Ausschluß von oxydierenden Agenzien und unter Erhalt ihrer Form in poröse, von Kohlenstoff-Kurzfasern durchsetzte Kohlenstoffkörper überführt, die
- im vierten Schritt mit einer Silicium enthaltenden Schmelze unter vermindertem Druck in Kontakt gebracht werden, wobei die Schmelze in den porösen Körper eindringt und dessen Poren teilweise füllt, wobei sich zumindest teilweise der Kohlenstoff mit dem Silicium zu Siliciumcarbid umsetzt, derart, daß der Massenanteil von Siliciumcarbid in der Matrix des Werkstoffs **B11** mindestens 40 % beträgt.

Es ist erfindungsgemäß auch möglich, im vierten Schritt die Menge der Schmelze so zu wählen, daß die Poren nicht vollständig mit der Silicium enthaltenden Schmelze gefüllt werden. Die restlichen zugänglichen Poren können dann in einer bevorzugten Ausführungsform mit einer weiteren Schmelze gefüllt werden, die eine Schmelztemperatur vom mindestens 550°C, bevorzugt mindestens 600 °C aufweist. Neben den Metallen, die dieser Bedingung genügen, wie Aluminium, Eisen, Chrom, Nickel, Kupfer, Molybdän, Wolfram, Vanadium, Niob, Tantal, Titan und Zirkon sind insbesondere auch Legierungen wie Messing und Bronze hier bevorzugt. Bevorzugt beträgt der Massenanteil dieser Metalle in der Matrix 2 % bis 20 %.

Soweit zum Anbringen der Beläge auf der Kupplungsscheibe Montagelöcher erforderlich sind, lassen sich diese mit Vorteil in die porösen Kohlenstoffkörper einbringen, die im dritten Schritt erhalten werden.

Eine bevorzugte Herstellungsvariante für die erfindungsgemäßen Werkstoffe nutzt ein kontinuierliches Verfahren, bei dem in einem Mischer die Mischung aus den Kurzfasern und dem Binder hergestellt wird, die in eine kontinuierliche Schneckenpresse (Extruder) gefüllt und durch ein Mundstück gepreßt wird, das der Kontur der gewünschten Beläge entspricht. Der Strang wird dann zerteilt, die erhaltenen Rohlinge werde wie oben beschrieben carbonisiert und mit der Silicium enthaltenden Schmelze behandelt. Durch diese Art der Herstellung erhalten die Kohlenstoff-Kurzfasern eine Vorzugsorientierung senkrecht zur Reibfläche der Beläge, dies hat sich auf die Höhe der Haftreibung besonders günstig ausgewirkt.

Die Erfindung betrifft ebenfalls die Verwendung der beschriebenen Reibpaarungen in Kupplungssystemen, wobei die Kupplungsscheibe aus einem Material gemäß **A** und die Kupplungsbeläge aus einem Material gemäß **B** ausgeführt werden.

## Patentansprüche

1. Kupplungssysteme mit einer Reibpaarung aus zwei Materialien, in der eines der Materialien ein faserverstärkter keramischer oder metallischer Werkstoff **A** ist, der Verstärkungsfasern aus Kohlenstoff oder keramischen Fasern oder Whiskern enthält, und das mit dem Material **A** in der Reibpaarung zusammenwirkende Material **B** ein keramischer Werkstoff **B11** ist, dessen Matrix einen Massenanteil von mindestens 40 % von Siliciumcarbid aufweist.

2. Kupplungssysteme mit einer Reibpaarung aus zwei Materialien, in der eines der Materialien ein faserverstärkter keramischer oder metallischer Werkstoff **A** ist, der Verstärkungsfasern aus Kohlenstoff oder keramischen Fasern oder Whiskern enthält, und das mit dem Material **A** in der Reibpaarung zusammenwirkende Material **B** ein keramischer Werkstoff **B11** nach Anspruch 1 ist, der durch Infiltration mit Metallschmelzen zu einem Werkstoff **B11'** modifiziert ist.

3. Kupplungssysteme mit einer Reibpaarung nach Anspruch 1oder 2, **dadurch gekennzeichnet, daß** die Materialien **B** faserverstärkt oder mit Metallwhiskern verstärkt sind.

4. Kupplungssysteme mit einer Reibpaarung nach Anspruch 1 oder 2, **dadurch gekennzeichnet, daß** die Materialien **B** mit Kurzfasern aus Kohlenstoff, Fasern aus carbidischen Materialien wie Siliciumcarbid und Borcarbid, Fasern aus oxidischen oder nitridischen keramischen Materialien wie Aluminiumoxid und Siliciumnitrid, amorphen Fasern wie Silicium-Bor-Carbid-Nitrid, oder mit Whiskern aus hochschmelzenden Metallen wie Molybdän, Wolfram, Tantal, Osmium oder Hafnium oder keramischen Stoffen verstärkt sind.

5. Kupplungssysteme mit einer Reibpaarung nach Anspruch 1, **dadurch gekennzeichnet, daß** der keramische Werkstoff **B11** herstellbar ist durch ein Verfahren, umfassend die folgenden Schritte:
- im ersten Schritt werden Kohlenstoff-Kurzfasern mit carbonisierbaren durch Erwärmen erweichenden Stoffen, nachfolgend als "Binder" bezeichnet, vermischt, diese Mischungen werden
- im zweiten Schritt unter Anwendung von Druck und Temperatur zu Körpern verpreßt, die in ihren Abmessungen den gewünschten Belägen entsprechen,
- die Preßkörper werden im dritten Schritt durch Erwärmen unter Ausschluß von oxydierenden Agenzien und unter Erhalt ihrer Form in poröse, von Kohlenstoff-Kurzfasern durchsetzte Kohlenstoffkörper überführt, die
- im vierten Schritt mit einer Silicium enthaltenden Schmelze unter vermindertem Druck in Kontakt gebracht werden, wobei die Schmelze in den porösen Körper eindringt und dessen Poren teilweise füllt, wobei sich zumindest teilweise der Kohlenstoff mit dem Silicium zu Siliciumcarbid umsetzt derart, daß der Massenanteil von Siliciumcarbid in der Matrix des Werkstoffs **B11** mindestens 40 % beträgt.

6. Kupplungssysteme mit einer Reibpaarung nach Anspruch 2, **dadurch gekennzeichnet, daß** der keramische Werkstoff **B11'** herstellbar ist durch ein Verfahren umfassend die folgenden Schritte:
- im ersten Schritt werden Kohlenstoff-Kurzfasern mit carbonisierbaren durch Erwärmen erweichenden Stoffen, nachfolgend als "Binder" bezeichnet, vermischt, diese Mischungen werden
- im zweiten Schritt unter Anwendung von Druck und Temperatur zu Körpern verpreßt, die in ihren Abmessungen den gewünschten Belägen entsprechen,
- die Preßkörper werden im dritten Schritt durch Erwärmen unter Ausschluß von oxydierenden Agenzien und unter Erhalt ihrer Form in poröse, von Kohlenstoff-Kurzfasern durchsetzte Kohlenstoffkörper überführt, die
- im vierten Schritt mit einer Silicium enthaltenden Schmelze unter vermindertem Druck in Kontakt gebracht werden, wobei die Schmelze in den porösen Körper eindringt und dessen Poren teilweise füllt, und wobei sich zumindest teilweise der Kohlenstoff mit dem Silicium zu Siliciumcarbid umsetzt, und anschließend in einem fünften Schritt die restlichen Poren ganz oder teilweise mit einer weiteren Schmelze eines Metalls gefüllt werden, die eine Schmelztemperatur von mindestens 550 °C aufweist.

7. Kupplungssysteme mit einer Reibpaarung nach Anspruch 6, **dadurch gekennzeichnet, daß** das Metall im fünften Schritt ausgewählt ist aus Aluminium, Eisen, Chrom, Nickel, Molybdän, Wolfram, Vanadium, Niob, Tantal, Titan und Zirkon sowie den Legierungen Messing und Bronze.

8. Kupplungssysteme mit einer Reibpaarung nach Anspruch 1 oder 2, **dadurch gekennzeichnet, daß** zu ihrer Herstellung die Ausgangsstoffe Verstärkungsfasern, keramische Stoffe, und Binder gemischt und geformt werden, wonach unter Druck- und Temperatureinfluß der Binder entfernt wird und der Formkörper gesintert wird.

9. Kupplungssysteme mit einer Reibpaarung nach Anspruch 1 oder 2, wobei die Kupplungsscheibe aus einem Material gemäß **A** und die Kupplungsbeläge aus einem Material gemäß **B** ausgeführt ist.

## Claims

1. A clutch system having a friction pairing of two materials in which one of the materials is a fibre-reinforced ceramic or metallic material **A** which comprises reinforcing fibres comprising carbon or ceramic fibres or whiskers, and the material **B** acting against the material **A** in the friction pairing is a ceramic material **B11,** the matrix of which has a mass fraction of at least 40 % of silicon carbide.

2. A clutch system having a friction pairing of two materials in which one of the materials is a fibre-reinforced ceramic or metallic material **A** which comprises reinforcing fibres comprising carbon or ceramic fibres or whiskers, and the material **B** acting against the material **A** in the friction pairing is a ceramic material **B11** as claimed in claim 1 which has been modified by infiltration with metal melts to form a material **B11'.**

3. A clutch system having a friction pairing as claimed in claim 1 or 2, wherein the materials **B** are fibre-reinforced or reinforced with metal whiskers.

4. A clutch system having a friction pairing as claimed in claim 1 or 2, wherein the materials **B** are reinforced with short carbon fibres, fibres comprising carbidic materials such as silicon carbide and boron carbide, fibres comprising oxidic or nitridic ceramic materials such as aluminium oxide and silicon nitride, amorphous fibres such as silicon-boron carbide-nitride or whiskers of high-melting metals such as molybdenum, tungsten, tantalum, osmium or hafnium or ceramic materials.

5. A clutch system having a friction pairing as claimed in claim 1, wherein the ceramic material **B11** can be produced by a process which comprises the following steps:
in the first step, short carbon fibres are mixed with carbonisable materials which soften on heating, hereinafter referred to as "binders", these mixtures are
in the second step, pressed with application of pressure and heat to form bodies whose dimensions correspond to the desired linings,
the pressed bodies are, in the third step, converted into porous carbon bodies permeated by short carbon fibres with retention of their shape by heating in the absence of oxidising agents, and these carbon bodies are
in the fourth step, brought into contact with a silicon-containing melt under reduced pressure, so that the melt penetrates into the porous body and fills its pores, with at least part of the carbon reacting with the silicon to form silicon carbide such that the mass fraction of silicon carbide in the matrix of the material **B11** is at least 40 %.

6. A clutch system having a friction pairing as claimed in claim 2, wherein the ceramic material **B11'** can be produced by a process which comprises the following steps:
in the first step, short carbon fibres are mixed with carbonisable materials which soften on heating, hereinafter referred to as "binders", these mixtures are
in the second step, pressed with application of pressure and heat to form bodies whose dimensions correspond to the desired linings,
the pressed bodies are, in the third step, converted into porous carbon bodies permeated by short carbon fibres with retention of their shape by heating in the absence of oxidising agents, and these carbon bodies are
in the fourth step, brought into contact with a silicon-containing melt under reduced pressure, so that the melt penetrates into the porous body and fills its pores, with at least part of the carbon reacting with the silicon to form silicon carbide, and subsequently in a fifth step the remaining pores are completely or partially filled with a further melt of a metal which has a melting temperature of at least 550°C.

7. A clutch system having a friction pairing as claimed in claim 6, wherein the metal in the fifth step is selected from among aluminium, iron, chromium, nickel, molybdenum, tungsten, vanadium, niobium, tantalum, titanium and zirconium and the alloys brass and bronze.

8. A clutch system having a friction pairing as claimed in claim 1 or 2, which is produced by mixing an d shaping th e starting materials reinforcing fibres, ceramic materials, and binder, and then removing the binder and sintering the shaped body under the action of pressure and heat.

9. A clutch system having a friction pairing as claimed in claim 1 or 2, wherein the clutch disk is made of a material as described under **A** and the clutch linings are made of a material as described under **B.**

## Revendications

1. Systèmes d'embrayage avec un accouplement de frottement en deux matériaux, dans lequel l'un des matériaux est un matériau A céramique ou métallique renforcé par des fibres, comprenant des fibres de 5renforcement de carbone ou des fibres céramiques ou des barbes, et le matériau B coopérant avec le matériau A dans l'accouplement de frottement est un matériau céramique B11, dont la matrice présente une fraction massique d'au moins 40% de carbure de silicium.

2. Systèmes d'embrayage avec un accouplement de frottement en deux matériaux, dans lequel l'un des matériaux est un matériau A céramique ou métallique renforcé par des fibres, comprenant des fibres de renforcement de carbone ou des fibres céramiques ou des barbes, et le matériau B coopérant avec le matériau A dans l'accouplement de frottement est un matériau céramique B11 selon la revendication 1, qui est modifié par l'infiltration de métaux liquides pour former un matériau B11'.

3. Systèmes d'embrayage avec un accouplement de frottement selon la revendication 1 ou 2, **caractérisés en ce que** les matériaux B sont renforcés par des fibres ou par des barbes métalliques.

4. Systèmes d'embrayage avec un accouplement de frottement selon la revendication 1 ou 2, **caractérisés en ce que** les matériaux B sont renforcés par des fibres courtes de carbone, des fibres de matériaux carbure tels que du carbure de silicium et du carbure de bore, des fibres en matériaux oxydés ou nitrurés tels que de l'oxyde d'aluminium et du nitrure de silicium, des fibres amorphes tels que du carbure-nitrure de bore et de silicium, ou des barbes de métaux à température de fusion élevée tels que du molybdène, du tungstène, du tantale, de l'osmium ou de hafnium ou des substances céramiques.

5. Systèmes d'embrayage avec un accouplement de frottement selon la revendication 1, **caractérisés en ce que** le matériau céramique B11 est susceptible d'être fabriqué par un procédé, comprenant les étapes suivantes :
- dans une première étape, des fibres courtes de carbone sont mélangées avec des substances ramollissant sous l'effet du chauffage, pouvant être carbonisées, désignées ci-après par « liants », ces mélanges sont
- dans une deuxième étape, comprimés sous l'effet de la pression et de la température pour former des corps, dont les dimensions correspondent aux garnitures souhaitées,
- les corps comprimés sont transformés dans une troisième étape par chauffage en excluant les agents oxydants et en conservant leur forme en des corps de carbone poreux, traversés par des fibres courtes de carbone qui
- dans une quatrième étape, sont amenés au contact d'une fonte contenant du silicium sous pression réduite, dans laquelle la fonte pénètre dans le corps poreux et remplit en partie ses pores, dans laquelle au moins une partie du carbone est converti avec le silicium en carbure de silicium de telle manière que la fraction massique de carbure de silicium dans la matrice du matériau B11 s'élève à au moins 40 %.

6. Systèmes d'embrayage avec un accouplement de frottement selon la revendication 2, **caractérisés en ce que** le matériau céramique B11' est susceptible d'être fabriqué par un procédé comprenant les étapes suivantes :
- dans une première étape, des fibres courtes de carbone sont mélangées avec des substances ramollissant sous l'effet du chauffage, pouvant être carbonisées, désignées ci-après par « liants », ces mélanges sont,
- dans une deuxième étape, comprimés sous l'effet de la pression et de la température pour former des corps, dont les dimensions correspondent aux garnitures souhaitées,
- les corps comprimés sont transformés dans une troisième étape par chauffage en excluant les agents oxydants et en conservant leur forme en des corps de carbone poreux, traversés par des fibres courtes de carbone qui,
- dans une quatrième étape, sont amenés au contact d'une fonte contenant du silicium sous pression réduite, dans laquelle la fonte pénètre dans le corps poreux et remplit en partie ses pores, et dans laquelle au moins une partie du carbone est converti avec le silicium en carbure de silicium puis dans une cinquième étape, les pores restants sont remplis entièrement ou partiellement d'une autre fonte d'un métal présentant une température de fusion d'au moins 550 °C.

7. Systèmes d'embrayage avec un accouplement de frottement selon la revendication 6, **caractérisés en ce que** le métal de la cinquième étape est sélectionné parmi l'aluminium, le fer, le chrome, le nickel, le molybdène, le tungstène, le vanadium, le niobium, le tantale, le titane et le zircon ainsi que les alliages de laiton et de bronze.

8. Systèmes d'embrayage avec un accouplement de frottement selon la revendication 1 ou 2, **caractérisés en ce que** pour leur fabrication, les matériaux de base fibres de renforcement, substances céramiques et liants sont mélangés et moulés puis le liant est retiré sous l'effet de la pression et de la température et le corps moulé est fritté.

9. Systèmes d'embrayage avec un accouplement de frottement selon la revendication 1 ou 2, dans lesquels le disque d'embrayage est réalisé en un matériau selon A et les garnitures d'embrayage en un matériau selon B.
